# EUROPÄISCHE PATENTANMELDUNG

(11) **EP 1 437 822 A1**
(43) Veröffentlichungstag der Anmeldung: **14.07.2004**
(21) Anmeldenummer: 03000726.4
(22) Anmeldetag: 13.01.2003
(51) Int. Cl.: H02K 44/00, F01D 1/04

(54) **Strömungsmaschine und Verfahren zum Betrieb einer Strömungsmaschine**

(71) Anmelder: SIEMENS AKTIENGESELLSCHAFT, 80333 München (DE)
(72) Erfinder: Haje, Detlef, Dr., 46236 Bottrop (DE); Pollak, Helmut, Dr., 45473 Mülheim a.d. Ruhr (DE)

(57) **Zusammenfassung**

Die Erfindung betrifft eine Strömungsmaschine (1) mit einem Rotor (3) und einem Stator (5), wobei ein Strömungskanal (7) für ein Aktionsfluid (A) gebildet ist, durch welches der Rotor (3) antreibbar ist. Die Strömungsmaschine (1) weist einen Magneten (9) zum Erzeugen eines vorgebbaren Magnetfelds (B) im Strömungskanal (7) auf. Die Erfindung betrifft weiterhin ein Verfahren zum Betrieb einer Strömungsmaschine (1) mit einem Rotor (3) und einem Stator (5) und einem Strömungskanal (7), bei dem der Strömungskanal (7) von einem ionenhaltigen Aktionsfluid (A) durchströmt und im Strömungskanal (7) ein definiertes Magnetfeld (B) erzeugt wird, wobei Ionen (27) in dem Magnetfeld (B) abgelenkt werden.

## Beschreibung

Die Erfindung betrifft eine Strömungsmaschine mit einem Rotor und einem Stator, wobei ein Strömungskanal für eine Aktionsfluid gebildet ist, durch welches der Rotor antreibbar ist. Die Erfindung betrifft weiterhin ein Verfahren zum Betrieb einer Strömungsmaschine mit einem Rotor und einem Stator und einem Strömungskanal.

Es sind Strömungsmaschinen bekannt, beispielsweise konventionelle Dampfturbinen oder Gasturbinen, bei deren Bauformen üblicherweise die Energieumwandlung mittels sogenannten Schaufelgittern oder Schaufelrädern erfolgt, die bei Durchströmen der Strömungsmaschine mit einem Aktionsfluid, z.B. Dampf oder Heißgas, den Rotor der Strömungsmaschine antreiben. Die dabei zum Einsatz kommenden Schaufelgitter haben die Funktion, in dem strömenden Aktionsfluid Druckenergie in kinetische Energie umzuwandeln sowie kinetische Energie in mechanische Energie umzusetzen. Diese Schäufelgitter werden üblicherweise als am Rotor befestigte Laufschaufelgitter oder als Leitschaufelgitter im Gehäuse ausgeführt.

Für die Auslegung derartiger Schaufelgitter ist insbesondere bei hohen Temperaturen des durch den Strömungskanal strömenden Aktionsfluids neben der Strömungsoptimierung insbesondere die Festigkeit, beispielsweise von Schaufel und Schaufelbefestigung, zu beachten. Besondere Bedeutung besitzt dabei, dass die Festigkeitskennwerte der eingesetzten Hochtemperatur-Werkstoffe mit hohen Temperaturen deutlich abnehmen. Eine höhere Prozesstemperatur wird aber generell angestrebt, da hiermit eine Steigerung des thermodynamischen Wirkungsgrades der Strömungsmaschine verbunden ist. Dieser Einfluss der hohen Betriebstemperatur auf die Festigkeitskennwerte der eingesetzten Werkstoffe gilt ebenfalls für die Rotoren thermischer Turbomaschinen. Hierbei ist neben den Schaufeln der Rotor eines der höchst beanspruchtesten Bauteile, insbesondere da er bei Vorhandensein hoher Materialtemperaturen erheblichen Fliehkräften ausgesetzt ist. Rotorfliehkräfte wirken dabei sowohl auf die Rotorwelle als auch auf die Laufschaufeln, die an der Umfangsfläche der Rotorwelle angeordnet sind. Darüber hinaus sind weitere Hochtemperatur-Einwirkungen auf Schaufeln oder Rotoren zu verzeichnen. Beispielhaft sei hier etwa auf die Hochtemperatur-Korrosion oder -Oxidation hingewiesen. Schaufeln für extrem hohe Anwendungstemperaturen, wie beispielsweise Gasturbinenschaufeln, werden daher teilweise aus einkristallinen Werkstücken hergestellt und bedürfen aufgrund der hohen Temperaturen des Aktionsfluids, z.B. des Heißgases, eines erheblichen Kühlungsbedarfs. Dazu wird ein Kühlmittelmassenstrom bereitgestellt, welcher im Falle einer Gasturbine beispielsweise einem der Gasturbine vorgeschalteten Verdichter als Verdichterentnahmeluft entnommen wird, die durch ein kompliziertes Kanal- und Bohrungssystem im Inneren einer Hohlschaufel zur Kühlung der Schaufel geführt wird (Drall-, Prall oder Filmkühlung). Zusätzlich benötigen derartige Schaufeln für den Hochtemperatureinsatz in heißen, aggressiven Medien Wärmedämmschichten für die Wärmeisolation sowie Korrosionsschutzschichten. Dabei sind bei Gasturbinen Turbineneinsatztemperaturen des Heißgases von 1200 °C und darüber hinaus möglich. Bei Dampfturbinen betragen die typischen Prozessdaten etwa zwischen 540 °C bis 600 °C für die Frischdampftemperatur bei etwa 250 bis 300 bar Frischdampfdruck des einer konventionellen Hochdruck-Teilturbine zugeführten Dampfes.

Die Umwandlung von Druckenergie in kinetische Energie sowie kinetische Energie in mechanische Energie unter Verwendung von Leitschaufelgittern und Laufschaufelgittern mit einer konventionellen Beschaufelung weisen daher gewisse Nachteile auf. Die Schaufeln besitzen naturgemäß fertigungsbedingt eine gewisse Wandstärke bzw. Dicke, die den effektiven Strömungsquerschnitt des Strömungskanals reduzieren. Dieser Effekt wird auch als Versperrungseffekt bezeichnet. Des Weiteren kann durch die endliche Schaufelzahl keine optimale homogene Umlenkung des Aktionsfluids erfolgen. Daneben besitzen Schaufelgitter einen Strömungswiderstand, d.h. es bilden sich Grenzschichten an den Schaufeln aus, die zu Sekundärverlusten in den nachfolgenden Schaufelgittern führen und beispielsweise bei Verdichtern in Verbindung mit einer zusätzlichen Fehlanströmung im Extremfall sogar eine Versperrung verursachen können. Wie bereits weiter oben diskutiert, sind aufgrund des Einsatzes von hochwertigen Hochtemperatur-Werkstoffen wegen der erhöhten Material und Fertigungskosten Schaufeln für den Einsatz in Hochtemperatur-Anwendungen sehr teuer und in ihrer Festigkeit begrenzt. Aufgrund der Festigkeitsgesichtspunkte bei den hohen Fliehkraftbelastungen von Laufschaufeln ist die Höhe der Schaufeln, d.h. die maximale Schaufelblattlänge, begrenzt. Im Falle eines Versagens einer Schaufel, beispielsweise infolge eines Ablösens vom Rotor aufgrund einer Überschreitung der maximal zulässigen Fliehkraftbelastung, können erhebliche Folgeschäden in der Strömungsmaschine auftreten. So können z.B. in einer axialen Strömungsmaschine insbesondere die in Strömungsrichtung des Aktionsfluids angeordneten nachfolgenden Schaufelgitter zerstört werden. Ein weiterer Nachteil der bekannten Beschaufelungen ist auf die stets auftretenden Spaltverluste zurückzuführen. Spaltmassenströme von Aktionsfluid, die zwischen einer Schaufel und einem der Schaufel unter Bildung eines Spalts gegenüberliegenden Bauteil hindurchtreten, resultieren in einem Wirkungsgradverlust (Spaltverlust). Um die Verluste möglichst gering zu halten müssen die Spaltmassenströme durch enge, fertigungstechnisch sehr aufwendig sicherzustellende Spiele begrenzt werden. Dabei darf ein minimales Spiel aus Gründen der Betriebssicherheit der Strömungsmaschine nicht unterschritten werden. Derartige Spaltverluste wurden beispielsweise in der Dissertation von Helmut Pollak "Experimentelle Untersuchungen der Strömungsvorgänge in axialen Kaltluftturbine unter besonderer Berücksichtigung der Radialspaltströme und ihre Einflussparameter", Rheinisch/Westfälische Hochschule, Aachen, untersucht.

In dem Buch "Kraftwerkstechnik zur Nutzung fossiler, regenerativer und nuklearer Energiequellen" von K. Straus, 4. Auflage, Berlin, Heidelberg, Springer Verlag, 1998, Seite 363-370 , sind magnetohydrodynamische Energiewandler sowie Kraftwerkskonzepte auf der Basis der magnetohydrodynamischen Energieumwandlung beschrieben. Das magnetohydrodynamische Prinzip als solches ist seit langem bekannt und wurde in der vorgenannten Literaturstelle bereits in Konzepte für Kraftwerke, sogenannte "MHD-Kraftwerke", eingebracht. Grundlage der magnetohydrodynamischen Energieumwandlung (MHD) ist das Prinzip der elektromagnetischen Induktion das auch bei der konventionellen Dynamomaschine genutzt wird. Nach diesem Prinzip wird in einem elektrisch leitenden Material eine Spannung induziert, wenn sich dieses relativ zu einem Magnetfeld bewegt. Bei einem MHD-Generator strömt ein elektrisch leitendes Fluid durch das Magnetfeld. Infolge der Wirkung des Magnetfeldes kommt es in dem Fluid zu einer Separation ungleichnamiger Ladungen und damit zur direkten Umwandlung von potentieller Energie des Plasmas in elektrischen Strom. Die elektrische Leitfähigkeit ist dabei eine besonders wichtige Eigenschaft des Arbeitsmittels in MHD-Generatoren. Will man die Rauchgase aus der Verbrennung fossiler Brennstoffe als Arbeitsmittel verwenden, müssen diese im Plasmazustand vorliegen, um elektrisch leitend zu sein. Die atomaren Bindungen der Elektronen mit den Kernen sind in diesem Zustand aufgebrochen - das Gas besteht dann vorwiegend aus freien Elektronen und positiv geladenen Ionen. Die teilweise Ionisierung eines Gases erreicht man durch Erhitzen auf sehr hohe Temperaturen von größer als 2000 °C. Aus praktischen Gründen sollte die Leitfähigkeit mindestens 10 S/m betragen. In Verbrennungsgasen erreicht man solche Werte in dieser Größenordnung nur bei Temperaturen von 2000 bis 2500 °C unter Zusatz von leicht ionisierbarem Materialien wie Cäsium oder Kalium. Aufgrund des für ein MHD-Kraftwerk vorgesehenen Funktionsprinzips konnten diese Kraftwerkskonzepte allerdings nicht bis zur Einsatzreife entwickelt werden.

Das Prinzip des MHD-Generators nach diesem Konzept ist es, durch eine Verbrennung mit stark erhitzter Verbrennungsluft in einer druckführenden Brennkammer den Plasmazustand, einen Zustand, in dem positive Ionen und Elektronen im Gas vorliegen, zu erzeugen. Das heiße Plasma tritt beim Austritt aus der Kammer in einen sogenannten Diffusor ein. In diesen Diffusor werden die positiven Ionen und die Elektronen durch ein Magnetfeld zu unterschiedlichen Elektroden hin abgelenkt, wo die Elektronen absorbiert werden und die Ionen durch die Aufnahme von Elektronen ihre Ladung verlieren. Auf diese Weise wird direkt ein Ladungsfluss bewirkt, d.h. ein Strom erzeugt. Nach dem Austritt aus dem MHD-Generator ist das Gas immer noch sehr heiß, etwa 2300 K. Zur weiteren Ausnutzung dieser in dem heißen Gas verfügbaren Wärmeenergie wird mittels Wärmetauschern die zuströmende Verbrennungsluft auf ca. 2100 K vorgewärmt. Die verbleibende Wärmeenergie wird durch konventionelle Abhitzekessel einem nachgeschalteten Dampfprozess zugeführt. Dieses Konzept ist mit erheblichen Problemen behaftet, die seiner praktischen großtechnischen Umsetzung bisher entgegenstehen:

So muss beispielsweise zur Erzielung eines Plasmas bei 2500 K, wie bereits oben beschrieben, das Gas mit leicht ionisierbaren Stoffen (Kalium, Cäsium) geimpft werden. Diese Alkalimetalle sind teuer und nur schwierig handhabbar. Überdies führen sie zur Verschmutzung und korrosiven Angriff der Wärmetauscherflächen, wie sie im Lufterhitzer und im Abhitzekessel vorgesehen sind. Weiterhin stellen die extrem hohen Temperaturen zur Erzielung des Plasmazustands erhebliche Herausforderungen an den MHD-Generator hinsichtlich geeigneter Hochtemperaturwerkstoffe. Davon betroffen sind auch Komponenten des Diffusors und der Wärmetauscher. Weiterhin muss man feststellen, dass der erreichbare Wirkungsgrad der derzeit bekannten und eingesetzten GUD-Kraftwerke inzwischen so hoch ist, dass eine große Wirkungsgradsteigerung mit der Technologie der MHD-Generatoren nur sehr schwierig zu erreichen wird.

Insofern konkurriert die Vorschaltung eines - technisch schwierig zu realisierenden - MHD-Generators vor den Dampfkraftprozess mit der Vorschaltung einer großtechnisch bereits bewährten und akzeptierten Gasturbine. Auf dem Weg zu einer kommerziellen MHD-Anlage sind aber auch außerhalb des eigentlichen MHD-Generators schwierige Probleme zu lösen. Die meisten davon sind durch das hohe Temperaturniveau im Plasmakanal bedingt, für dessen Konstruktion alle bisher bekannten metallischen Werkstoffe ausscheiden. Auch bei den Elektroden haben Erosion, Korrosion und Wärmespannungen die Betriebszeit auf weniger als 1000 Std. begrenzt. Trotz einer intensiven Forschung ist daher die kommerzielle Realisierung einer MHD-Anlage derzeit nicht abzusehen.

In einer zusammenfassenden Würdigung der bisher bekannten Konzepte kann man sagen, dass bei konventionellen Gasturbinen und Dampfturbinen die Schaufeln und Rotor, neben Brennkammerund Kesselbauteilen, zu den höchst beanspruchten Bauteilen derartiger Strömungsmaschinen zählen. Dabei ist insbesondere die Eintrittsbeschaufelung aufgrund der hohen Temperaturen des heißen Aktionsfluids besonders betroffen. Die Hochtemperatur-Festigkeit der Schaufelwerkstoffe begrenzt dabei mögliche Einsatztemperaturen und erfordert zum Teil technisch aufwendige Kühlungsmaßnahmen. Für die Hersteller von Gasturbinen und Dampfturbinen ist die Erhöhung der oberen Prozesstemperatur jedoch ein wesentlicher Ansatzpunkt zur Wirkungsgradsteigerung. Sowohl im Bereich der Gasturbinen- als auch der Dampfturbinentechnologie sind zum Teil erhebliche Anstrengungen zur Anhebung der oberen Prozesstemperatur zu beobachten. Demgegenüber findet der Einsatz des magnetohydrodynamischen Effekts in den oben beschriebenen MHD-Kraftwerken wegen der unzureichenden Realisierbarkeit, vor allem wegen des nachteiligen Wirkungsprinzips und der technologischen Schwierigkeiten, bis heute keine großtechnische Anwendung.

Aufgabe der Erfindung ist es eine Strömungsmaschine anzugeben, die die Nachteile der vorbeschriebenen bekannten Konzepte vermeidet. Eine weitere Aufgabe der Erfindung ist es ein Verfahren zum Betrieb einer Strömungsmaschine anzugeben.

Die erstgenannte Aufgabe wird erfindungsgemäß gelöst durch eine Strömungsmaschine mit einem Rotor und einem Stator, wobei ein Strömungskanal für ein Aktionsfluid gebildet ist, durch welches der Rotor antreibbar ist, wobei ein Magnet vorgesehen ist, der zum Erzeugen eines vorgebbaren Magnetfelds im Strömungskanal dient.

Mit der Erfindung wird ein völlig neues Konzept für eine Strömungsmaschine beschrieben, bei der die Anwendung des magnetohydrodynamischen Effektes zur Ablenkung des Strömungsmediums innerhalb von Strömungsmaschinen anstelle von Schaufelgittern erfolgt. Somit wird die Realisierung einer "MHD-Turbine" oder eines "MHD-Verdichters" möglich. Der magnetohydrodynamische Effekt bewirkt eine Ablenkung von elektrisch geladenen Teilchen eines Strömungsmediums im Strömungskanal der Strömungsmaschine. Zur Erzeugung eines definierten magnetischen Felds ist der Magnet vorgesehen, der geladene Teilchen im Aktionsfluid gemäß der Lorenzkraft-Ablenkung ablenkt. Bewegt man eine elektrische Ladung mit einer bestimmten Geschwindigkeit in einem vorgegebenen Magnetfeld, beschrieben durch die magnetische Induktion, so erfährt die elektrische Ladung eine Kraft. Diese Kraft steht immer senkrecht zur Geschwindigkeit. Geladene Teilchen im durch den Strömungskanal strömenden Aktionsfluid erfahren daher durch das von dem Magneten erzeugte definierte Magnetfeld eine Ablenkung, sofern das Magnetfeld zumindest eine Komponente senkrecht zur Bewegungsrichtung der geladenen Teilchen, d. h. der Strömungsrichtung des Aktionsfluids, aufweist. Geladene Teilchen werden im Idealfall eines unendlich ausgedehnten homogenen Magnetfelds auf eine Kreisbahn gezwungen. Bei Durcheilen eines endlichen, d.h. eines räumlich begrenzten Magnetfelds folgen die Teilchen somit einem Kreisbogen. Dieser Effekt wird gemäß der Erfindung ausgenutzt zur Ablenkung des Aktionsfluids selbst im Strömungskanal einer Strömungsmaschine. Durch den Magneten ist ein sowohl zeitlich als auch räumlich definiertes Magnetfeld in dem Strömungskanal erzeugbar, was zu einer definierten Ablenkung geladener Teilchen im Aktionsfluid und durch einen Mitnahmeeffekt infolge Impulstransfers eine Ablenkung des Aktionsfluids selbst führt. Die Ablenkung erfolgt dabei vorteilhafter Weise in Form von durch das Magnetfeld vorgegebenen definierten Ablenkungsebenen zwischen Rotor und Stator, welche in Hauptströmungsrichtung des Aktionsfluids, beispielsweise in axialer Richtung im Falle einer Axialmaschine, eine begrenzte Ausdehnung besitzen (Lokalisierung des Magnetfeldes). Die Bereitstellung einer magnetischen Ablenkungsebene für die geladenen Teilchen bzw. das Aktionsfluid durch das Magnetfeld ist in ihrer Wirkung einem konventionellen Schaufelgitter sehr ähnlich: Im Falle einer axialen Strömungsmaschine erfolgt beispielsweise eine Ablenkung von überwiegend axialer Strömung des Aktionsfluids in einer Strömung mit sowohl axialer als auch tangentialer Komponente, dies aufgrund der Tatsache, dass aufgrund der Lorenzkraft den geladenen Teilchen senkrecht zur Strömungsrichtung durch die Wechselwirkung mit dem Magnetfeld eine tangentiale Komponente aufgeprägt wird. Diese Ablenkung ist mit einer Umwandlung von Druckenergie des Aktionsfluids in kinetische Energie, analog einem Leitgitter einer konventionellen Turbine, verbunden. In gleicher Weise ist es möglich von einer Strömung des Aktionsfluids mit axialer und tangentialer Komponente eine Umwandlung in eine überwiegend axiale Strömung - unter Umwandlung kinetischer Energie in mechanische Arbeit, analog zu einem Laufgitter einer konventionellen Turbine - zu erzielen. Eine geeignete Magnetfeldkonfiguration mit räumlich und ggf. zeitlich durch den Magneten erzeugten Magnetfeld in dem Strömungskanal erlaubt mithin analog zu konventionellen Turbinen eine fortschreitende Expansion des Aktionsfluids unter Gewinnung von mechanischer Arbeit, die in Form von Rotationsenergie auf den Rotor übertragbar ist.

Mit der Erfindung wird dabei vorteilhafter Weise die Funktion der Ablenkung des strömenden Aktionsfluids, die bei hohen Temperaturen mittels konventioneller Schaufeln nur unter erheblichen Kosten oder gar nicht realisiert werden kann, weiterhin gewährleistet aber hier gegenüber der konventionellen Turbinentechnik durch ein magnetisches Feld oder durch magnetische Felder erreicht. Dabei kombiniert die Erfindung in vorteilhafter Weise das bekannte Funktionsprinzip der konventionellen Strömungsmaschinen mit dem Ablenkungseffekt eines Magnetfelds auf geladene Teilchen. Zugleich können die spezifischen Nachteile des MHD-Kraftwerkskonzepts vermieden werden, weil für den Betrieb der Strömungsmaschine nicht zwingend eine thermische Erzeugung eines Plasmas bei extrem hohen Temperaturen erforderlich ist. Im Unterschied zu einem MHD-Generator wird auch nicht auf direkte Stromerzeugung durch Ladungsablenkung auf Elektroden zurückgegriffen, sondern bei der Expansion des Aktionsfluids in der Strömungsmaschine wird mechanische Energie in Form von Rotationsenergie des Rotors erzeugt. Dadurch ist es möglich, bei der Entwicklung neuer Gasturbinen- und Dampfturbinentechnologien mit dem Konzept der Strömungsmaschine deutlich höhere Prozesstemperaturen zu erreichen, was zu einer Erhöhung des thermischen Wirkungsgrads der Turbinen führt. Die Anwendung einer neuen, vorteilhaften Funktionsweise für den Strömungsmaschinenbau ist dadurch möglich, wobei grundlegende Verbesserungen zu erwarten sind.

In einer bevorzugten Ausgestaltung der Strömungsmaschine weist der Stator den Magneten auf. Dabei ist es möglich den Magneten in den Stator zu integrieren, so dass das durch den Magneten erzeugte Magnetfeld in den Strömungskanal hineinwirkt. Dabei ist es auch möglich, dass der Stator mehrere Magneten aufweist, so dass das Magnetfeld räumlich im Strömungskanal entsprechend den Erfordernissen sehr genau eingestellt werden kann. Im Falle einer Axialmaschine, bei der der Stator üblicherweise zugleich eine äußere Begrenzung des Strömungskanals bildet und zugleich als Außengehäuse der Strömungsmaschine fungieren kann, ist der Magnet vorteilhafter Weise besonders gut zugänglich für eventuelle Wartungsoder Revisionsarbeiten oder für das Anbringen von Sensoren (z.B. Magnetfeldsensoren) zur Diagnostik der Strömungsmaschine. Weiterhin kann das Statormaterial bei Wahl eines ferromagnetischen Stoffes zugleich zur Erhöhung der magnetischen Flussdichte und damit des Magnetfelds in dem Strömungskanal verwendet werden.

In einer besonders bevorzugten Ausgestaltung der Strömungsmaschine ist das Magnetfeld radial gerichtet und weist entlang der Rotationsachse des Rotors bezogen auf die radiale Richtung mindestens einen Vorzeichenwechsel auf.

Ein radiales Magnetfeld kann beispielsweise durch einen am Stator angebrachten Magneten erzeugt werden, wobei das Magnetfeld sich radial einwärts durch den Strömungskanal in den Rotor hinein erstreckt. Durch den Vorzeichenwechsel der radialen Magnetfeldkomponente entlang der Rotationsachse ist zumindest ein Bereich im Strömungskanal gegeben, in dem die Feldlinien des Magnetfelds beispielsweise vom Stator radial einwärts zum Rotor verlaufen und zumindest ein zweiter Bereich im Strömungskanal, in dem Feldlinien aus dem Rotor austreten, sich radial auswärts durch den Strömungskanal erstrecken und in den Stator eintreten. In dem zweiten Bereich liegt somit bezogen auf die radiale Richtung ein umgekehrtes Vorzeichen des Magnetfelds vor, als es im erstgenannten Bereich der Fall ist. Mit dem Vorzeichenwechsel des Magnetfelds ist es möglich geladene Teilchen im Strömungskanal in zueinander entgegengesetzte Richtungen senkrecht zur Bewegungsrichtung der geladenen Teilchen, d.h. des Aktionsfluids, abzulenken. Im Falle einer axialen Strömungsmaschine ist es günstig zumindest einen Vorzeichenwechsel des Magnetfelds vorzusehen, so dass entlang der Rotationsachse des Rotors zumindest zwei unterschiedliche räumliche Bereiche mit einem Magnetfeld unterschiedlichen Vorzeichens vorliegt. Bei Bewegung eines geladenen Teilchens entlang der axialen Richtung der Strömungsmaschine erfolgt somit eine Tangentialablenkung in dem ersten Bereich, beispielsweise im Uhrzeigersinn, während in dem zweiten Bereich das geladene Teilchen eine Kraft in entgegengesetzter Richtung erfährt, beispielsweise entgegen dem Uhrzeigersinn.

Anhand der folgenden vereinfachten Betrachtungsweisen soll das Funktionsprinzip der Strömungsmaschine modellhaft vorgestellt werden: Dabei werden die Feldlinien des Ablenkungsmagnetfelds nur in ihrer Hauptwirkungsrichtung, d. h. radial zwischen Rotor und Stator, berücksichtigt, d.h. es erfolgt eine idealisierte Betrachtung im Wesentlichen paralleler Magnetfeldlinien, die entweder radial einwärts oder radial auswärts gerichtet sind. Durch diese Vereinfachung werden Streueinflüsse und ihre Auswirkungen vernachlässigt, was im Rahmen einer Verdeutlichung des grundlegenden Prinzips zulässig sein sollte. Weiterhin wird die Bewegung der Ionen gegenüber den Betrachtungen der Gasdynamik, welche die thermische Bewegung der Teilchen in alle Raumrichtungen gleich verteilt betrachtet, nur zu dem Anteil berücksichtigt, der sich aus der Anströmung des Aktionsfluids ergibt. Die Anströmung des Aktionsfluids ist den im Wesentlichen gleich verteilt angenommenen thermischen Bewegungen überlagert. Insofern kommt bei der Betrachtung der Ablenkungseffekte die dieser thermischen Gleichverteilung überlagerte Geschwindigkeit des strömenden Aktionsfluids - im statistischen Mittel - zum Tragen.

Beim Eintritt in ein radial zwischen Rotor und Stator durch den Magneten im Strömungskanal definiert erzeugtes Magnetfeld, werden im strömenden Aktionsfluid vorhandene elektrisch geladene Teilchen durch das Magnetfeld abgelenkt. Vorausgesetzt wird hierbei als Hauptströmungsrichtung des Aktionsfluids die axiale Richtung, wie es z.B. bei einer axialen Strömungsmaschine der Fall ist. Dabei wirkt auf die beladenen Teilchen eine von der magnetischen Flussdichte im Strömungskanal, von der Geschwindigkeit und der Ladung der Teilchen abhängige Kraft, die senkrecht zur Bewegungsrichtung gerichtet ist. Diese Ablenkungskraft wird auch als Lorenzkraft bezeichnet. Als geladene Teilchen kommen entweder Elektronen mit einer vergleichsweise geringen Masse und einer negativen Elementarladung oder einfach oder mehrfach geladene positive Ionen mit deutlich höherer Masse infrage. Wegen der unterschiedlichen Vorzeichen der geladenen Teilchen werden die Elektronen in umgekehrter Richtung als die positiven geladenen Ionen abgelenkt. Aufgrund der deutlichen Massenunterschiede (etwa Faktor 10⁴) werden die Elektronen außerdem auf eine viel kleinere Kreisbahn gezwungen als die Ionen. Stellt man das radiale Magnetfeld so ein, dass die Ionen bei Durchlaufen des Magnetfelds eine Ablenkung erfahren, die in ihrer Wirkung der Ablenkung durch ein konventionelles Schaufelgitter entspricht, so werden die Elektronen folglich auf eine sehr viel kleinere Kreisbahn gezogen, deren Radius im Allgemeinen kleiner ist als die axiale Ausdehnung des radialen Ablenkungsfelds. Die Elektronen verlassen das Magnetfeld also nicht, wie die Ionen, mit einer gezielten, wohl definierten Ablenkung, sondern gelangen auf eine Kreisbahn mit deutlich geringerem Radius oder eine schraubenlinienförmige Bahn, je nach ursprünglicher Richtung und Geschwindigkeit beim Eintritt in das Magnetfeld. Durch Stöße zwischen Elektronen und anderen Teilchen des Aktionsfluids ergeben sich überdies Änderungen in der Flugbahn und ggf. in der Geschwindigkeit der Elektronen, so dass diese letztlich ebenfalls das Magnetfeld verlassen können. Infolge der gezielten Ablenkung der mit vergleichsweise hoher Masse versehenen Ionen um einen bestimmten Umfangswinkel beim Durchlaufen eines mit einem Magnetfeld, insbesondere mit einem radialen Magnetfeld, durchfluteten Bereichs des Strömungskanals einerseits und den durch Stoßprozesse bewirkten im Wesentlichen diffusen Austritt der deutlich leichteren Elektronen andererseits wird ein Drehimpuls auf das die geladenen Teilchen aufweisende Aktionsfluid übertragen. Je nach räumlicher Anordnung, Stärke und Vorzeichen des vom Magneten erzeugten Magnetfelds im Strömungskanal können somit unterschiedliche Ablenkungseffekte, d.h. ein unterschiedlicher Drehimpulsübertrag auf das Aktionsfluid betragsmäßig und richtungsmäßig eingestellt werden.

Vorzugsweise ist ein sich axial erstreckender magnetischer Leitschaufelbereich mit konstantem Vorzeichen des Magnetfeldes und ein sich axial erstreckender Laufschaufelbereich mit gegenüber dem Leitschaufelbereich umgekehrten Vorzeichen des Magnetfelds vorgesehen.

In dem magnetischen Leitschaufelbereich kommt es durch Ablenkung des in axialer Richtung strömenden Aktionsfluids analog zu konventionellen Turbinenleitgittern zu einer Erhöhung der Strömungsgeschwindigkeit. Dabei wird der axialen Hauptströmungsrichtung ein tangentialer Anteil überlagert, wobei eine Umwandlung von Druckenergie in kinetische Energie erfolgt. Der magnetische Leitschaufelbereich weist dabei ein definiertes Vorzeichen des Magnetfeldes auf, d.h. radial einwärts oder radial auswärts in dem gesamten Leitschaufelbereich. Der magnetische Leitschaufelbereich ist dabei räumlich ein Teilbereich des Strömungskanals. Die Stärke des Magnetfelds kann aber innerhalb des magnetischen Leitschaufelbereichs durchaus variieren, ist aber vorzugsweise nahezu konstant. Der magnetische Leitschaufelbereich definiert also sozusagen eine als Leitgitter fungierende Ablenkungsebene bzw. ein sich in der axialen Richtung erstreckende Ablenkungsscheibe, die abstrakt betrachtet eine einem herkömmlichen Turbinenleitgitter äquivalente Wirkung auf das Aktionsfluid ausübt.

In analoger Weise erfolgt in dem magnetischen Laufschaufelbereich eine Ablenkung der weitgehend axial gerichteten Strömung des Aktionsfluids derart, dass der dem Medium entzogene Drehimpuls auf den Rotor der Strömungsmaschine übertragen wird. In dem magnetischen Leitschaufelbereich und in dem magnetischen Laufschaufelbereich ist das Magnetfeld dabei im Wesentlichen radial gerichtet. Der magnetische Leitschaufelbereich und magnetische Laufschaufelbereich bilden dabei beispielsweise räumlich verschiedene Teilbereiche des Strömungskanals. In dieser Ausgestaltung erfolgt die Ablenkung des Aktionsfluids in der Strömungsmaschine in Form von beispielsweise in axialer Richtung räumlich begrenzter Ablenkungsebenen oder Ablenkungsscheiben durch ein radial gerichtetes Ablenkungsmagnetfeld, welches sich zwischen Stator und Rotor durch den Strömungskanal erstreckt. Durch die in Strömungsrichtung des Aktionsfluids räumlich begrenzte Ausdehnung (Ablenkscheibe bzw. Ablenkebene) ist die Wirkung des magnetischen Leitschaufelbereich und des magnetischen Laufschaufelbereichs der Wirkung von Schaufelgittern in konventionellen Strömungsmaschinen, z.B. Gasturbinen, Dampfturbinen, Verdichtern, sehr ähnlich. Es erfolgt dabei eine Ablenkung der überwiegend axialen Strömung in eine Strömung mit axialer und tangentialer Komponente, wobei Druckenergie in kinetische Energie umgewandelt wird. Der magnetische Leitschaufelbereich ist insofern analog einem Leitgitter einer konventionellen Turbine hinsichtlich der grundlegenden Wirkungsweise zu betrachten. Im magnetischen Laufschaufelbereich erfolgt eine Ablenkung einer Strömung mit axialer und tangentialer Komponente in eine überwiegend axiale Strömung, wobei kinetische Energie in mechanische Arbeit umgewandelt wird. Dieser Effekt ist seinem Wesen nach analog der Wirkung eines Laufgitters einer konventionellen Turbine. Vorteilhafter Weise kann durch eine geeignete Anordnung von aufeinander folgenden magnetischen Leitschaufelbereichen und Laufschaufelbereichen eine analog zu konventionellen Turbinen fortschreitende Expansion des Arbeitsfluids unter Gewinnung mechanischer Energie in Form von Rotationsenergie des Rotors erzielt werden.

Bevorzugt ist daher der magnetische Laufschaufelbereich dem magnetischen Leitschaufelbereich in Strömungsrichtung des Aktionsfluids axial nachgeordnet. Hierdurch wird eine Stufe analog einer konventionellen Turbomaschine mit einem Leitrad und einem Laufrad realisiert. Die magnetische Stufe der Strömungsmaschine weist dabei einen magnetischen Leitschaufelbereich und einen axial sich daran anschließenden magnetischen Laufschaufelbereich auf. Der magnetische Laufschaufelbereich muss sich dabei nicht unmittelbar an den magnetischen Leitschaufelbereich in Strömungsrichtung anschließen. Zwischen dem magnetischen Leitschaufelbereich und dem axial nachgeordneten magnetischen Laufschaufelbereich kann der Strömungskanal feldfrei oder im Wesentlichen ohne ein nennenswertes Magnetfeld sein. In einem derartigen Zwischenbereich erfolgt dann praktisch keine weitere Ablenkung der geladenen Teilchen und mithin kein weiterer Drehimpulsübertrag auf das die geladenen Teilchen aufweisende strömende Aktionsfluid.

Bevorzugt ist eine Anzahl von magnetischen Leitschaufelbereichen und Laufschaufelbereichen abwechselnd entlang der Rotationsachse angeordnet. Somit können in der Strömungsmaschine mehrere magnetische Stufen, d.h. eine Mehrzahl von axial, d.h. entlang der Rotationsachse abwechselnd hintereinander angeordneter magnetischer Leitschaufelbereiche und magnetischer Laufschaufelbereiche realisiert sein. Auf dies kann wiederum in einer gewissen Analogie zu den bekannten Strömungsmaschinen mit mehreren axial hintereinander angeordneten Stufen gesehen werden. Je nach Anforderung können somit Strömungsmaschinen mit verschiedener Stufenzahl und Stufengröße umfassend jeweils einen magnetischen Leitschaufelbereich und einen sich daran anschließenden magnetischen Laufschaufelbereich, konzipiert werden.

Vorzugsweise umfasst zur Begrenzung des Magnetfelds im magnetischen Leitschaufelbereich der magnetische Leitschaufelbereich einen sich radial einwärts erstreckenden Vorsprung des Stators. Durch den radial einwärts sich erstreckenden Vorsprung ist eine lokale Erhöhung der magnetischen Flußdichte erreicht, d.h. die Magnetfeldlinien werden im Raum zwischen dem Vorsprung und dem dem Vorsprung in radialer Richtung einwärts gegenüberliegenden Rotor konzentriert. Durch diese Konfiguration ist lokal näherungsweise eine magnetische Dipolstruktur realisiert, wobei abhängig von der gewählten Polarität z.B. aus dem Vorsprung austretende Magnetfeldlinien einen magnetischen Nordpol bilden, während die gegenüberliegende Rotorfläche in die die Magnetfeldlinien eintreten einen Südpol bildet. Der räumliche Einschluß (confinement) des Feldes ermöglicht eine gezielte Ablenkung von geladenen Teilchen im Aktionsfluid, so dass in Analogie zu einer herkömmlichen Strömungsmaschine eine Leitschaufel realisiert ist, deren Wirkprinzip allerdings auf magnetischer Ablenkung von geladenen Teilchen beruht.

Allerdings sind gegenüber herkömmlicher Beschaufelung bei der magnetischen Leitschaufel der Erfindung vorteilhafterweise keine komplexen Geometrien für den Vorsprung erforderlich. Der Vorsprung kann hinsichtlich seiner Geometrie und seiner magnetischen Eigenschaften des Materials so ausgestaltet sein, so dass bestmögliche Ergebnisse - ähnlich wie bei einem Polschuh - erzielt werden. Der Vorsprung kann hierbei konstruktiv einfach an die Radialsymmetrie, insbesondere an die zylindermantelförmige Oberflächenkontur des Rotors, angepasst sein und besteht aus einem Material mit hoher magnetischer Permeabilität, um entsprechend hohe magnetische Flußdichten des radialen Ablenkungsmagnetfeldes zu erzielen.

In bevorzugter Ausgestaltung weist zur axialen Begrenzung des Magnetfelds im magnetischen Leitschaufelbereich der Stator einen sich radial einwärts erstreckenden Umfangsring auf, an dem der Vorsprung angeordnet ist. Der Umfangsring erstreckt sich vollumfänglich um die Rotationsachse des Rotors. Die axiale Ausdehnung des Umfangsrings bestimmt hierbei im Wesentlichen auch die axiale Erstreckung des Magnetfeldes. Durch den axialen und den radialen Einschluß ist im magnetischen Leitschaufelbereich eine magnetische Ablenkebene - auf Grund deren axialen Abmessung genauer gesagt eine magnetische Ablenkscheibe - realisiert, in Analogie zu einer Leitschaufelreihe oder -gitter bei einer konventionellen Strömungsmaschine.

Hierzu sind in bevorzugter Ausgestaltung mehrere sich radial einwärts erstreckende Vorsprünge über den vollen Umfang des Stators angeordnet. Durch die Vielzahl von Vorsprüngen wird über den vollen Umfang eine gleichwirkende und daher verstärkte Ablenkung des Strömungsmediums erreicht, wobei entsprechend der Anzahl und Anordnung der Vorsprünge räumliche Bereiche mit hoher Magnetfeldstärke gebildet sind. Aus Symmetriegründen sind die Vorsprünge vorteilhafterweise regelmäßig über den vollen Umfang des Stators, z.B. entlang eines gedachten regelmäßigen Vielecks, verteilt. Dabei ist eine Ausgestaltung mit einem wie vorher beschreibenen Umfangsring, an dem mehrere Vorsprünge angeordnet sind, für einen radialen und axialen Feldeinschluß besonders günstig.

Bezüglich des magnetischen Laufschaufelbereichs umfasst dieser in besonders bevorzugter Ausgestaltung zur räumlichen Begrenzung des Magnetfelds einen sich radial auswärts erstreckenden Vorsprung des Rotors. Die Vorteile dieser Konfiguration ergeben sich in Analogie zum magnetischen Leitschafelbereich:

Durch den radial auswärts sich erstreckenden Vorsprung ist eine lokale Erhöhung der magnetischen Flußdichte erreicht, d.h. die Magnetfeldlinien werden im Raum zwischen dem Vorsprung und dem dem Vorsprung in radialer Richtung auswärts gegenüberliegenden Stator konzentriert. Durch diese Konfiguration ist lokal näherungsweise eine magnetische Dipolstruktur realisiert, wobei abhängig von der gewählten Polarität z.B. aus dem Vorsprung austretende Magnetfeldlinien einen magnetischen Nordpol bilden, während die gegenüberliegende Statorfläche, in die die Magnetfeldlinien eintreten, einen Südpol bildet. Der räumliche Einschluß (confinement) des Feldes ermöglicht eine gezielte Ablenkung von geladenen Teilchen im Aktionsfluid, so dass in Analogie zu einer herkömmlichen Strömungsmaschine hiermit eine auf magnetischer Ablenkung von geladenen Teilchen beruhende Laufschaufel realisiert ist.

Bevorzugt sind hierbei mehrere sich radial auswärts erstreckende Vorsprünge über den vollen Umfang des Rotors angeordnet. Durch die Vielzahl von Vorsprüngen wird über den vollen Umfang eine gleichwirkende und daher verstärkte Ablenkung des Strömungsmediums erreicht, wobei entsprechend der Anzahl und Anordnung der Vorsprünge räumliche Bereiche mit hoher Magnetfeldstärke gebildet sind. Aus Symmetriegründen sind die Vorsprünge vorteilhafterweise regelmäßig über den vollen Umfang des Rotors, z.B. entlang eines gedachten regelmäßigen Vielecks, verteilt. Dabei ist eine Ausgestaltung mit einem wie vorher bereits im Zusammenhang mit dem magnetischen Leitschaufelbereich beschreibenen Umfangsring, an dem mehrere Vorsprünge angeordnet sind, für einen radialen und axialen Feldeinschluß besonders günstig.

Vorzugsweise weist die Strömungsmaschine eine Ionisierungseinrichtung zur Erzeugung von geladenen Teilchen im Aktionsfluid auf. Die Ionisation von Neutralteilchen im Aktionsfluid kann hierbei auf unterschiedliche Weise mittels der Ionsierungseinrichtung erfolgen, beispielsweise durch Stoßionisation oder durch Strahlungsionisation. Je nach Wirkungsquerschnitt für die Ionisation bestimmter Neutralteilchen ist eine geeigneter Ionisationsprozeß zu wählen, auf dessen Prinzip die Ionisierungseinrichtung arbeiten soll. Hohe Temperaturen wie bei einer thermischen Plasmaerzeugung sind dabei vorteilhafterweise nicht erforderlich. Auch ist Mehrfachionisation möglich. Mittels der Ionisierungseinrichtung ist damit ein ionenhaltiges Aktionsfluid erzeugbar bzw. bereitstellbar, welches die magnetohydrodynamische Strömungsmaschine der Erfindung beim Durchströmen des Strömungskanals antreibt.

Vorzugsweise weist die Strömungsmaschine eine Rekombinationseinrichtung zur Rekombination von geladenen Teilchen im Aktionsfluid.

Die auf ein Verfahren gerichtete Aufgabe wird erfindungsgemäß gelöst durch ein Verfahren zum Betrieb einer Strömungsmaschine mit einem Rotor und einem Stator und einem Strömungskanal, bei dem der Strömungskanal von einem ionenhaltigen Aktionsfluid durchströmt und im Strömungskanal ein definiertes Magnetfeld erzeugt wird, wobei Ionen in dem Magnetfeld abgelenkt werden.

Die Vorteile des Verfahrens ergeben sich in analoger Weise aus den Vorteilen der oben beschriebenen Strömungsmaschine.

Dabei wird in bevorzugter Ausgestaltung des Verfahrens der Rotor infolge der Ablenkung von Ionen aufgrund der Wechselwirkung mit dem Magnetfeld in Rotation versetzt.

Weiter bevorzugt wird im Strömungskanal ein auf die Ionen einwirkendes radiales Magnetfeld derart erzeugt, dass beim Durchströmen des Strömungskanals die tangentiale Geschwindigkeitskomponente des ionenhaltigen Aktionsfluids gezielt beeinflusst wird. Die Wirkung der Lorenzkraft auf die geladenen Teilchen, d.h. der gegenüber den Elektronen deutlich schwereren Ionen, wird hierbei gezielt ausgenutzt, um im Ergebnis dem Aktionsfluid einen Netto-Drehimpuls (Drall) aufzuprägen. Der Drehimpulstransfer kann zu einer Drallerhöhung oder zu einer Drallverringerung des strömenden sich entspannenden Aktionsfluids führen.

Vorzugsweise wird im Strömungskanal ein radiales Magnetfeld erzeugt, welches entlang der Strömungsrichtung des ionenhaltigen Aktionsfluids alterniert. Dabei bedeutet alternierendes Magnetfeld, dass entlang der Strömungsrichtung die radiale Komponente des Magnetfelds mindestens einen Vorzeichenwechsel aufweist, d.h eine Umpolung der Radialkomponente stattfindet.

Das Magnetfeld wird dabei in bevorzugter Ausgestaltung des Verfahrens zeitlich und/oder räumlich geregelt. Dies kann z.B. durch entsprechende Anordnung und elektrische Ansteuerung des Magneten oder der Magnete zur Erzeugung eines vorgebbaren Feldverteilung im Strömungskanal erfolgen.

Bevorzugt wird das ionenhaltige Aktionsfluid durch Ionisation von Teilchen im Aktionsfuid vor Durchströmen des Strömungskanals gebildet. Dies kann z.B. durch eine der Eintrittsöffnung des Strömungskanals vorgeschaltete Ionisierungseinrichtung erreicht werden.

Weiter bevorzugt werden Ionen durch Ionisation von Teilchen im Aktionsfluid während dem Durchströmen des Strömungskanals gebildet. Die in situ-Erzeugung hat dabei den Vorteil, dass die Ionen gezielt in den Bereichen erzeugt werden können, wo sie für die Vermittlung einer magnetischen Ablenkung auch benötigt werden, d.h. in dem magnetischen Leitschaufelbereich oder dem magnetischen Laufschaufelbereich.

Zur Erzeugung der Ionen werden diese vorzugsweise durch Stoßionisation gebildet. Alternativ oder zusätzlich werden Ionen durch Strahlungsionisation gebildet, wobei Aktionsfluid mit einer für Teilchen im Aktionsfluid ionisierend wirkenden Strahlung bestrahlt wird. Diese Strahlung kann beispielsweise UV-Strahlung oder Röntgenstrahlung sein.

Vorzugsweise wird in einem Rekombinationsprozeß und/oder einem katalytischen Prozeß das Aktionsfluid von schädigenden Substanzen gereinigt. Die Reinigung wird bevorzugt während und/oder nach Durchströmen des Strömungskanals durchgeführt.

Im folgenden wird die Erfindung anhand einer Zeichnung näher erläutert. Darin zeigen in vereinfachter und nicht maßstäblicher Darstellung
- FIG 1: ein Ausschnitt einer auf einem magnetohydrodynamischen Prinzip basierenden Strömungsmaschine,
- FIG 2: eine Bahnkurve eines geladenen Teilchens in einem räumlich begrenzten Magnetfeld,
- FIG 3: Schnittansicht in axialer Richtung durch einen magnetischen Leitschaufelbereich entlang der Schnittlinie III-III der in FIG 1 dargestellten Strömungsmaschine,
- FIG 4: Schnittansicht in axialer Richtung durch einen magnetischen Laufschaufelbereich entlang der Schnittlinie IV-IV der in FIG 1 dargestellten Strömungsmaschine,
- FIG 5: in einem Diagramm den druck- und Geschwindigkeitsverlauf für eine konventionelle Turbine,
- FIG 6: zum Vergleich mit FIG 5 in einem Diagramm den druck- und Geschwindigkeitsverlauf für eine Turbine mit magnetohydrodynamischer Beschaufelung
- FIG 7: in einem Blockdiagramm die Anordung der Prozessfunktionen am Beispiel einer Dampfturbine unter Einsatz magnetohydrodynamischer Beschaufelung, und
- FIG 8: in einem Blockdiagramm die Anordnung der Prozessfunktionen am Beispiel einer Gasturbine unter Einsatz magnetohydrodynamischer Beschaufelung

Gleiche Bezugszeichen haben in den Figuren die gleiche Bedeutung.

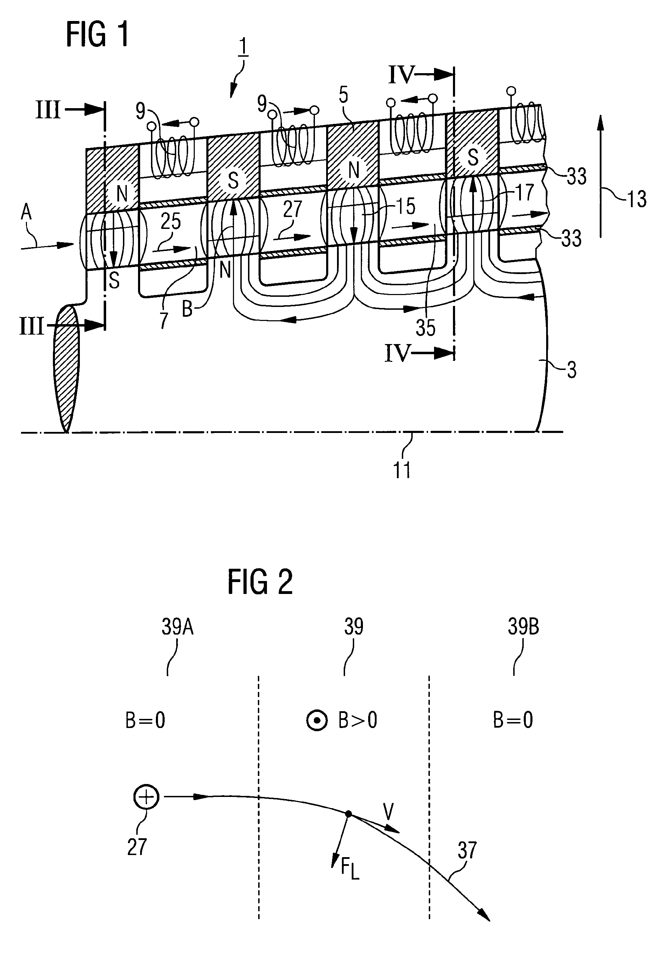

Figur 1 zeigt in einem Ausschnitt eine Strömungsmaschine 1, welche nach einem magnetohydrodynamischen Prinzip arbeitet. Die Strömungsmaschine 1 weist hierzu einen sich entlang einer Rotationsachse 11 erstreckenden Rotor 3 auf. Ein Stator 5 umgibt den Rotor 3 über den vollen Umfang konzentrisch beabstandet , so dass ein ringförmiger axialer Strömungskanal 7 gebildet ist, dem ein ionenhaltiges Aktionsfluid A, z.B. ein ionenhaltiger Dampf oder ein Gas zuführbar ist. Durch das Aktionsfluid A ist der Rotor 3 bei Durchströmen des Strömungskanals 7 antreibbar, wobei magnetische Ablenkeffekte auf geladene Teilchen 25, insbesondere auf Ionen 27, im Aktionsfluid A gezielt ausgenutzt werden.

Hierzu weist die Strömungsmaschine 1 einen Magneten 9 zum Erzeugen eines vorgebbaren Magnetfelds B im Strömungskanal 7 auf. Der Magnet 9 ist in den Stator 5 ortsfest integriert und kann z.B. wie gezeigt als eine Magnetspule ausgestaltet sein, wobei das gewünschte Magnetfeld B im Strömungskanal 7 in seiner Feldstärke durch Einstellung bzw. Regelung einer elektrischen Stromstärke durch die Spule erreicht wird. Vorteihafterweise werden durch diese Konstruktion nur ruhende Wicklungen verwendet. Um die magnetische Flußdichte zu erhöhen besteht der Stator 5 dabei zumindest teilweise aus einem ferromagnetischem Material. Desgleichen ist der Rotor 3 aus ferromagnetischem Material ausgeführt. Hierdurch ist ein guter Magnetfeld-Ringschluss erreicht und es werden besonders hohe Flußdichten im Strömungskanal 7 gerade dort erzielt, wo die Wechselwirkung des Magnetfelds B mit den Ionen 27 vorgesehen ist. Das Magnetfeld B ist im Strömungskanal 7 im Wesentlichen radial gerichtet, d.h. senkrecht zur Hauptströmungsrichtung parallel zur Rotationsachse 11 des mit Ionen 27 beladenen Aktionsfluids A. Entlang der Rotationsachse 11 des Rotors 3 weist das Magnetfeld B bezogen auf die radiale Richtung zumindest einen Vorzeichenwechsel auf, d.h. es liegt zumindest eine Umpolung vor. Die Magnetfeldverteilung wird so eingestellt, dass - räumlich betrachtet - ein sich axial erstreckender magnetischer Leitschaufelbereich 15 mit konstantem Vorzeichen des Magnetfelds im Strömungskanal 7 gebildet ist. Weiterhin ist ein sich axial erstreckender magnetischer Laufschaufelbereich 17 mit gegenüber dem Leitschaufelbereich 15 umgekehrtem Vorzeichen des Magnetfelds B vorgesehen. Zwischen dem magnetischen Leitschaufelbereich 15 und dem magnetischen Laufschaufelbereich 17 ist ein nahezu feldfreier Zwischenraum 35 gebildet, in dem keine magnetische Ablenkung der geladenen Teilchen 25 zu verzeichnen ist. Ein magnetischer Laufschaufelbereich 17 ist dabei unter Bildung des axialen Zwischenraums 35 einem magnetischen Leitschaufelbereich 15 axial nachgeordnet. Die dadurch gebildete Magnetfeldkonfiguration kann, analog zu einer herkömmlichen Turbinenstufe, als magnetohydrodynamische Stufe oder MHD-Stufe bezeichnet werden. Eine Anzahl solcher MHD-Stufen sind entlang der Rotationsachse 11 nacheinander angeordnet, so daß in der Strömungsmaschine 1 eine entsprechende Anzahl von magnetischen Leitschaufelbereichen 15 und Laufschaufelbereichen 17 abwechselnd entlang der Rotationsachse 11 unter Bildung eines jeweiligen feldfreien Zwischenraums 35 angeordnet sind. Der Zwischenraum 35 wird radial einwärts, d.h. rotorseitig, und radial auswärts, d.h. statorseitig, durch ein jeweiliges Strömungsführungsblech 33 begrenzt. Aufgrund der gewünschten Feldfreiheit des Zwischenraums 35 ist das Strömungsführungsblech 33 in vorteilhafter Ausgestaltung nicht aus einem ferromagnetischen Material.

FIG 2 zeigt zur Erläuterung eine Bahnkurve 37 (Trajektorie) eines positiv geladenen Ions 27 in einem räumlich begrenzten Magnetfeld B, wie es idealisiert durch die MHD-Beschaufelung in der Strömungsmaschine 1 der Figur 1 vorliegt. Dabei ist ein räumlich begrenzter Bereich 39 mit einem Magnetfeld B gezeigt, welcher in axialer Richtung von feldfreien Bereichen 39A, 39B begrenzt ist. Aufgrund der Wirkung der Lorentzkraft F_{L} auf das mit der Geschwindigkeit v sich bewegende geladene Ion 27 findet eine Ablenkung im Bereich 39 senkrecht zur Magnetfeldrichtung und senkrecht zur Bewegungsrichtung des Ions 27 statt, was zu einer gekrümmten Bahnkurve 37 im Bereich 39 führt. In den feldfreien Bereichen 39A, 39B findet hingegen keine Ablenkung statt, d.h. die Bahnkurve verläuft im Wesentlichen ungestört, d.h. geradlinig. Diese elementare Feldverteilung des Magnetfelds B und deren Wirkung auf ein strömendes, expandierendes ionenhaltiges Aktionsfluid A wird mit dem Konzept der Erfindung erstmals bei einer Strömungsmaschine vorgeschlagen.

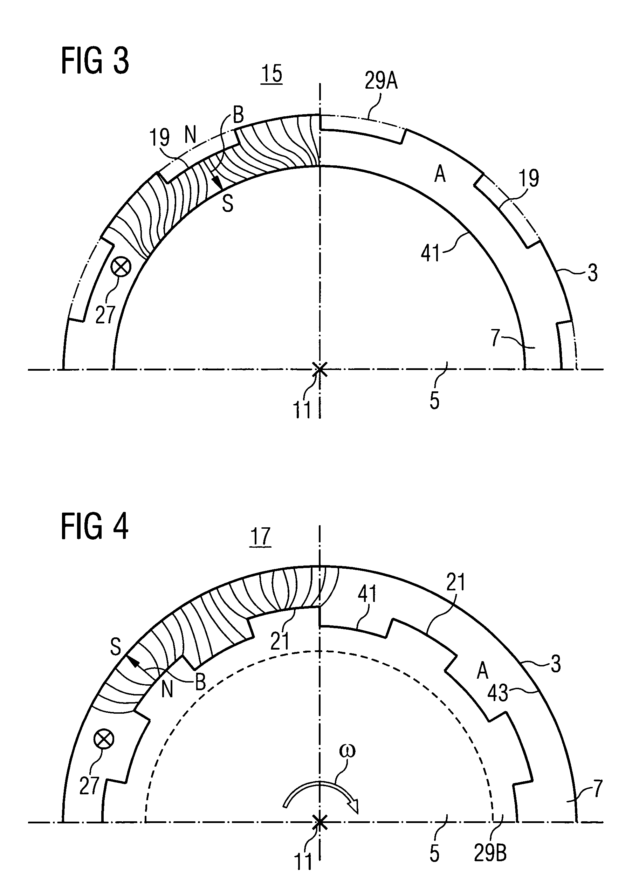

Figur 3 zeigt zur näheren Erläuterung eine stark vereinfachte Schnittansicht in axialer Richtung durch einen magnetischen Leitschaufelbereich 15 entlang der Schnittlinie III-III der in FIG 1 dargestellten Strömungsmaschine 1. Der Stator 5 umgibt den Rotor 3 konzentrisch unter Bildung des Strömungskanals 7. Zur Begrenzung des Magnetfelds B im magnetischen Leitschaufelbereich 15 weist der magnetische Leitschaufelbereich 15 mehrere sich radial einwärts erstreckende Vorsprünge 19 auf, die über den vollen Umfang des Stators 5 angeordnet sind. Die Vorsprünge 19 sind hierbei auf einem sich radial einwärts in den Strömungskanal 7 erstreckenden Umfangsring 29A angeordnet und beispielsweise einstückig mit diesem verbunden. Der die Vorsprünge 19 aufweisende Umfangsring 29A umfasst den Rotor 5 vollumfänglich und bildet einen Teil eines nicht näher dargestellten Statorgehäuses. Zur besseren Übersicht ist die Feldverteilung des Magnetfelds B nur in einem Teilbereich des Leitschaufelbereichs 15 dargestellt. Die Polarität ist dergestalt gewählt, dass der magnetische Nordpol N bei den Vorsprüngen 19 des Stators 5 gebildet ist, so dass die Feldlinien bei den Vorsprüngen 19 austreten, den Strömungskanal 7 vorwiegend in radialer Richtung einwärts durchdringen und durch die Rotoroberfläche 41 in das Innere des Rotors 3 eintreten. Aufgrund der Ionen 27 im strömenden Aktionsfluid A ist ein Ladungsstrom durch den Strömungskanal 7 erreicht, der mit dem Magnetfeld im magnetischen Leitschaufelberich 15 und im magnetischen Laufschaufelbereich 17 (Figur 4) wechselwirkt, wobei ein induktiver Effekt zu verzeichen ist. Hierbei wird auf Grund des Ladungsstrom selbst - analog einem stromdurchflossenen Leiter in einem Magnetfeld - ein magnetisches Feld erzeugt, welches sich dem externen Magnetfeld B im Strömungskanal überlagert. Hierdurch werden entlang des Ladungsstroms bei einer konstruktiver Überlagerung Feldbereiche mit erhöhter Feldliniendichte gebildet sowie gleichzeitig bei destruktiver Überlagerung entsprechende Feldbereiche mit niedrigerer Feldliniendichte. Da Magnetfeldlinien die Tendenz haben sich zu verkürzen, führt dies zu einer Ablenkung des Ladungsstroms vom Feldbereich mit erhöhter Feldliniendichte zum Feldbereich mit niedriger Feldliniendichte (Lorentz'sches Gesetz).

Figur 4 zeigt in analoger Darstellung zu Figur 3 eine Schnittansicht in axialer Richtung durch einen magnetischen Laufschaufelbereich 17 entlang der Schnittlinie IV-IV der in FIG 1 dargestellten Strömungsmaschine. Zur räumlichen Begrenzung des Magnetfelds B im magnetischen Laufschaufelbereich 17 weist der magnetische Laufschaufelbereich 17 mehrere sich radial auswärts erstreckende Vorsprünge 21 auf, die über den vollen Umfang des Rotors 3 auf einem Umfangsring 29B des Rotors 5 angeordnet sind. Der Umfangsring 29B dient der räumlichen Begrenzung, insbesondere in axialer Richtung, des Magnetfelds B im magnetischen Laufschaufelbereich 17 und erstreckt sich sich radial auswärts. Die Polarität des Magnetfelds B ist gegenüber dem magnetischen Laufschaufelbereich 17 (Figur 3) hier so gewählt, dass magnetische Nordpole N nunmehr bei den Vorsprüngen 21 des Rotors 5 gebildet sind, so dass die Feldlinien bei den Vorsprüngen 21 austreten, den Strömungskanal 7 in radialer Richtung auswärts durchdringen und durch die Statoroberfläche 43 in das Innere des Stators 3 eintreten. Durch die Vorsprünge 19,21 wird eine Konzentration der Magnetfeldlinien, d.h. eine erhöhte Stärke des radialen Magnetfelds B im Leitschaufelbereich 17 bzw. im Laufschaufelbereich 15 erzielt und dadurch die Wechselwirkung des Magnetfelds B mit dem durch die Bewegung der Ionen 27 einhergehenden Ladungsstrom auf diese lokalen Bereiche beschränkt. Durch die Feldverteilung in dem Leitschaufelbereich 17 und dem Laufschaufelbereich 15 werden so magnetische Ablenkungsebenen (Leitebenen und Laufebenen) bzw. auf Grund der axialen Dimension Ablenkungsscheiben realisiert.

Die Bereitstellung solcher magnetischer Ablenkungsebenen für die geladenen Teilchen 25, 27 bzw. das ionenhaltige Aktionsfluid A durch das Magnetfeld B ist in ihrer Wirkung dabei einem konventionellen Schaufelgitter sehr ähnlich:
Im Falle einer - wie hier beispielhaft diskutiert - axialen Strömungsmaschine 1 erfolgt beispielsweise eine Ablenkung von überwiegend axialer Strömung des Aktionsfluids A in einer Strömung mit sowohl axialer als auch tangentialer Komponente, dies aufgrund der Tatsache, dass aufgrund der Lorentzkraft F_{L} (Figur 2) den geladenen Teilchen 25, 27 senkrecht zur Strömungsrichtung durch die Wechselwirkung mit dem Magnetfeld B eine tangentiale Komponente aufgeprägt wird. Diese Ablenkung ist mit einer Umwandlung von Druckenergie des Aktionsfluids A in kinetische Energie, analog einem Leitgitter einer konventionellen Turbine, verbunden. In gleicher Weise ist es möglich von einer Strömung des Aktionsfluid A mit axialer und tangentialer Komponente eine Umwandlung in eine überwiegend axiale Strömung - unter Umwandlung kinetischer Energie in mechanische Arbeit, analog zu einem Laufgitter einer konventionellen Turbine - zu erzielen. Eine geeignete Magnetfeldkonfiguration mit räumlich und ggf. zeitlich durch den Magneten 9 erzeugten Magnetfeld B in dem Strömungskanal 7 erlaubt mithin analog zu konventionellen Turbinen eine fortschreitende Expansion des Aktionsfluids A unter Gewinnung von mechanischer Arbeit, die in Form von Rotationsenergie auf den Rotor 3 wegen der zu verzeichnenden magnetisch-induzierten Drehimpulsänderung übertragbar ist, so dass dieser mit einer Winkelgeschwindigkeit ω rotiert.

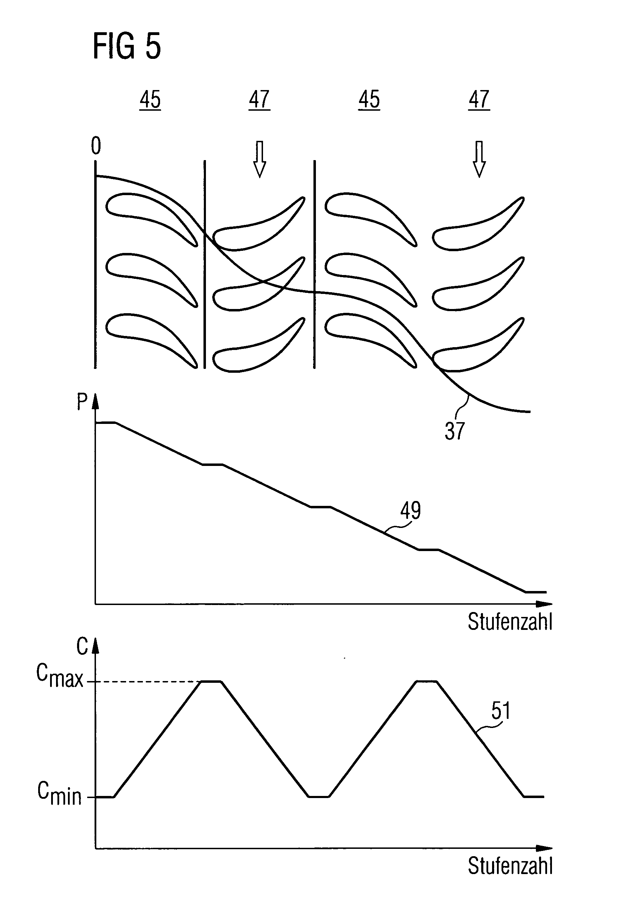

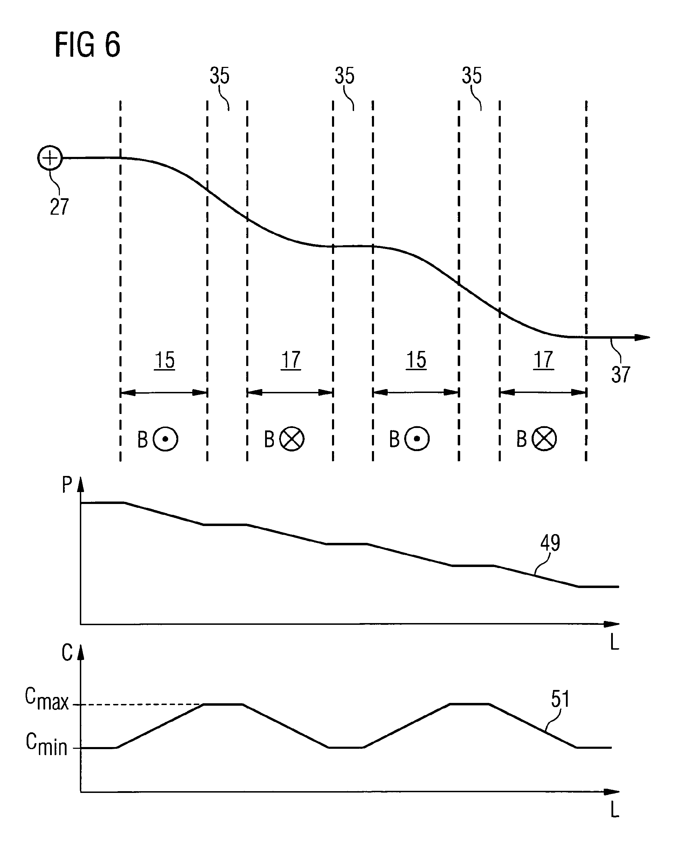

Um die Analogie der MHD-Strömungsmaschine 1 mit einer konventionellen Turbine, z.B. einer Dampfturbine, zu illustrieren sind in den Figuren 5 und 6 der Druckverlauf 49 und der Geschwindigkeitsverlauf 51 für eine konventionelle Überdruckturbine mit herkömmlicher Beschaufelung (Figur 5) und für eine Strömungsmaschine 1 mit MHD-Beschaufelung gezeigt. Der Bahnverlauf 37 in Figur 5 eines Teilchens, z.B. eines Gasoder Dampfmoleküls, durch die Turbinenstufen, die jeweils aus konventionellem Leitrad 45 und Laufrad 47 gebildet sind, ähnelt qualitativ in hohem Maße dem Bahnverlauf 37 eines Ions 27 beim Durchlaufen der magnetischen Stufen der Erfindung, die jeweils axial aufeinander folgend aus einem magnetischen Leitschaufelbereich 15, einem feldfreien Zwischenraum 35 und einem magnetischen Laufschaufelbereich 17 zusammengesetzt sind. Diese Analogie ist auch bei dem Druckverlauf 49 und bei dem Geschwindigkeitsverlauf zu finden:

Der Druckverlauf 49 des in axialer Richtung expandierenden Aktionsfluids A ist im mittleren Teildiagramm der Figuren 5 und 6 gegenüber der axialen Lauflänge L (Figur 6) bzw. gegenüber der Stufenzahl (Figur 5) aufgetragen. Der Druck p ist auf der Y-Achse der Koordinatensysteme und die axiale Lauflänge L bzw. die Stufenzahl auf der X-Achse aufgetragen. Der Druck p nimmt in beiden Teildiagrammen gleichermaßen stufenförmig entlang der X-Achse ab, wobei insbesondere im magnetischen Leitschaufelbereich 17 und Laufschaufelbereich 15 entsprechend dem Druckverlauf über die konventionelle Leitschaufelreihe 45 und die Laufschaufelreihe 47 ein deutlicher Druckabfall zu verzeichnen ist. Dazwischen ist der Druck p näherungsweise konstant.

Der Geschwindigkeitsverlauf 51 des in axialer Richtung expandierenden Aktionsfluids A ist im unteren Teildiagramm der Figuren 5 und 6 gegenüber der axialen Lauflänge L (Figur 6) bzw. gegenüber der Stufenzahl (Figur 5) aufgetragen. Die Geschwindigkeit c ist auf der Y-Achse der Koordinatensysteme und die axiale Lauflänge L bzw. die Stufenzahl auf der X-Achse aufgetragen. Mit der Geschwindigkeit c ist in diesen Fällen die sogenannte Absolutgeschwindigkeit gemeint, eine im Turbinenbau allgemein bekannte Größe.

Die Geschwindigkeit c alterniert in beiden Teildiagrammen gleichermaßen zwischen einem Minimalwert cₘᵢₙ und einem Maximalwert cₘₐₓ. Dabei steigt die Geschwindigkeit c über eine Leitschaufelreihe 45 von dem Minimalwert cₘᵢₙ bis zu dem Maximalwert cₘₐₓ an, erreicht einen plateauförmigen nahezu konstanten Abschnitt, um anschließend über die nachfolgende Laufschaufelreihe 47 wieder von dem Maximalwert cₘₐₓ bis zu dem Minimalwert cₘᵢₙ abzunehmen. Dieser Geschwindigkeitsverlauf 51 ist exakt auch im entsprechenden unteren Teildiagramm der Figur 6 zu finden, wo diese Effekte auf die Geschwindigkeit c auch bei der axialen Expansion des Aktionsfluids A durch einen magnetischen Leitschaufelbereich 15, den Zwischenraum 35 sowie den magnetischen Laufschaufelbereich 17 auftreten.

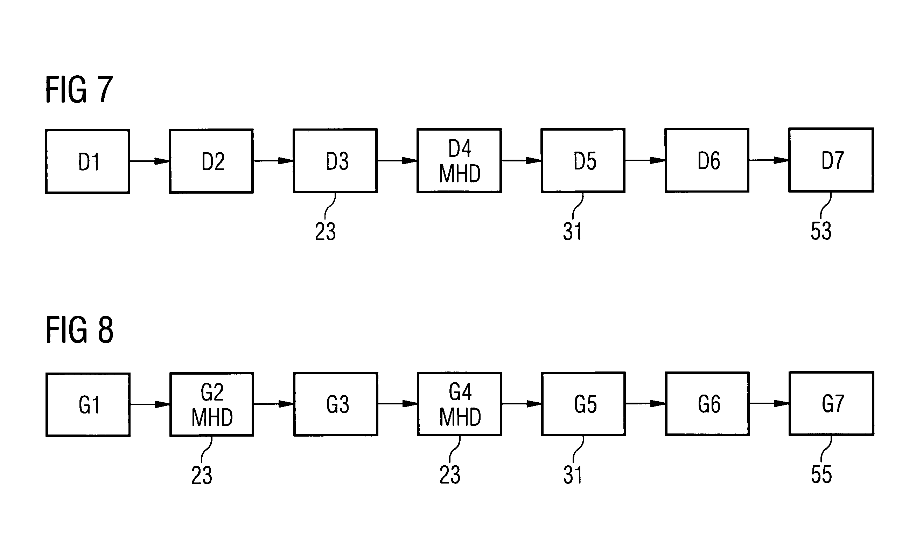

In einem Blockdiagramm zeigt Figur 7 stark vereinfacht und schematisch die Anordnung der Prozessfunktionen D1 bis D7 und Prozesseinrichtungen am Beispiel einer Dampfturbine unter Einsatz magnetohydrodynamischer (MHD-) Beschaufelung der Erfindung. Zunächst sind vorgeschaltete Prozessfunktionen D1 und D2 vorgesehen, die vor dem eigentlichen MHD-Prozess in einer Strömungsmaschine 1, hier einer Dampfturbine mit einem Dampfprozess, durchgeführt werden. Die vorgeschalteten Prozessfunktionen umfassen zunächst die Wärmezufuhr in das Aktionsfluid A, hier dem Wasser- oder Wasserdampf. Die Aufheizung des Aktionsfluids im Prozessschritt D1 kann dabei beispielsweise in einem Kessel, einem Dampferzeugerkessel, erfolgen. Anschließend erfolgt (optional) in D2 ein konventioneller Dampfturbinenprozess, wobei das aufgeheizte Aktionsfluid A eine konventionelle Dampfturbinenbeschaufelung arbeitsleistend durchströmt und sich dabei teilentspannt. Zur Erzeugung eines ionenhaltigen Aktionsfluids A ist in Prozessschritt D3 die Ionisation von Teilchen im Aktionsfluid A vorgesehen. Hierzu ist eine Ionisierungseinrichtung 23 implemantiert, die z.B. mittels Strahlungsionisation oder Elektronen-Stoßionisation Ionen 27 (vgl. auch Figur 1) mit ausreichender Dichte im Aktionsfluid A erzeugt. In Prozessschritt D4 wird der eigentliche MHD-Prozess durchgeführt. Der Strömungskanal 7 wird von dem ionenhaltigen Aktionsfluid A durchströmt, wobei in dem Strömungskanal 7 ein definiertes Magnetfeld B erzeugt wird, wobei die Ionen in dem Magnetfeld abgelenkt werden. Der Rotor 3 der MHD-Strömungsmaschine 1 wird infolge der Ablenkung der Ionen 27 aufgrund der Wechselwirkung mit dem Magnetfeld in Rotation versetzt. Ionen 27 können dabei durch Ionisation von Teilchen im Aktionsfluid A auch während dem Durchströmen des Strömungskanals 7 im MHD-Prozessschritt D4 erzeugt werden. Falls erforderlich ist ein Prozessschritt D5 dem MHD-Prozessschritt D4 nachgeschaltet, bei welchem in einem Rekombinationsprozess und/oder in einem katalytischen Prozess das Aktionsfluid von schädigenden Substanzen gereinigt wird. Für diesen Reinigungsschritt ist z.B. eine Rekombinationseinrichtung 31 implementiert. Die nachgeschalteten Prozessschritte D6 und D7 sind konventioneller Natur: So erfolgt (optional) in D6 wiederum ein konventioneller Dampfturbinenprozess, wobei das noch heiße Aktionsfluid A eine konventionelle Dampfturbinenbeschaufelung arbeitsleistend durchströmt und sich dabei weiter entspannt. Auf diese Weise ist eine möglichst hoher Gesamtwirkungsgrad der gesamten Dampfturbinenanlage erzielbar. Abschließend wird in Prozessschritt D7 die Wärmeabfuhr aus dem weitgehend entspannten Aktionsfluid A in einem Kondensator 53 durchgeführt.

In einem weiteren Blockdiagramm zeigt Figur 8 stark vereinfacht und schematisch die Anordung der Prozessfunktionen G1 bis G7 und Prozeßeinrichtungen am Beispiel einer Gasturbine unter Einsatz magnetohydrodynamischer (MHD-) Beschaufelung der Erfindung. Zunächst ist eine vorgeschaltete Prozessfunktionen D1 vorgesehen, die vor dem eigentlichen MHD-Prozess in einer Strömungsmaschine 1, hier einer Gasturbine mit Gasturbinenprozess, durchgeführt wird. Die vorgeschaltete Prozessfunktion G1 umfasst zunächst das Verdichten eines Aktionsfluid A, hier von Verdichterluft in einem konventionellen Verdichterteil. Anschließend erfolgt in G2 optional ein MHD-Verdichterprozess, bei dem ein ionenhaltiges Aktionsfluid A mittels einer Ionisierungseinrichtung 23 erzeugt und in einem MHD-Prozess in einem MHD-Verdichter mit MHD-Beschaufelung verdichtet wird. Danach wird in Schritt G3 das derart verdichtete Aktionsfluid A aufgeheizt. Die Aufheizung des Aktionsfluids A im Prozessschritt G3 kann dabei beispielsweise in der Brennkammer der Gasturbine durchgeführt werden, wobei die Verdichterluft aus Prozessschritt G2 zusammen mit einem Brennstoff verbrannt wird und somit ein heißes Verbrennungsgas als Aktionsfluid A für den nachgeschalteten Prozessschritt G4 zur Verfügung steht.

Zur Erzeugung eines ionenhaltigen Aktionsfluids A ist in Prozessschritt G4 die Ionisation von Teilchen im Aktionsfluid A vorgesehen. Hierzu ist eine Ionisierungseinrichtung 23 implementiert, die z.B. mittels Strahlungsionisation oder Elektronen-Stoßionisation Ionen 27 (vgl. auch Figur 1) mit ausreichender Dichte im Aktionsfluid A erzeugt. In Prozessschritt G4 wird zugleich der eigentliche MHD-Prozess durchgeführt. Der Strömungskanal 7 wird von dem ionenhaltigen Aktionsfluid A durchströmt, wobei in dem Strömungskanal 7 ein definiertes Magnetfeld B erzeugt wird, wobei die Ionen 27 in dem Magnetfeld abgelenkt werden. Der Rotor 3 der MHD-Strömungsmaschine 1, hier einer MHD-Gasturbine, wird infolge der Ablenkung der Ionen 27 aufgrund der Wechselwirkung mit dem Magnetfeld in Rotation versetzt. Ionen 27 können dabei durch Ionisation von Teilchen im Aktionsfluid A auch zusätzlich noch vor Eintritt in den Strömungskanal 7 im MHD-Prozessschritt G4 erzeugt werden. Falls erforderlich ist ein Prozessschritt G5 dem MHD-Prozessschritt G4 nachgeschaltet, bei welchem in einem Rekombinationsprozess und/oder in einem katalytischen Prozess das Aktionsfluid A von schädigenden Substanzen gereinigt wird. Für diesen Reinigungsschritt ist z.B. eine Rekombinationseinrichtung 31 implementiert. Die nachgeschalteten Prozessschritte D6 und D7 sind konventioneller Natur: So erfolgt (optional) in G6 wiederum ein konventioneller Gasturbinenprozess, wobei das noch heiße Aktionsfluid A, d.h. das Heißgas, eine konventionelle Gasturbinenbeschaufelung arbeitsleistend durchströmt und sich dabei weiter entspannt und abkühlt. Auf diese Weise ist eine möglichst hoher Gesamtwirkungsgrad der gesamten Gasturbinenanlage, die die Prozessschritte G1 bis G7 umfasst, erzielbar. Abschließend wird in Prozessschritt G7 die Wärmeabfuhr aus dem bereits weitgehend entspannten und abgekühlten Aktionsfluid A in einem Abhitzekessel 55, einer sonstigen Wärmetauschereinrichtung oder einem Kamin vorgenommen.

Zusammenfassend bleibt festzuhalten, dass - wie gezeigt wurde - eine MHD-Beschaufelung für eine Strömungsmaschine bedeuten kann, dass sowohl magnetische Leitschaufelbereiche 15 als auch magnetische Laufschaufelbereiche 17 unter Ausnutzung des magnetohydrodynamischen Effekts in einer Strömungsmaschine 1 realisiert sind. Es ist aber ebenso möglich ein konventionelles Leitrad oder eine Leitschaufelreihe 45 mit einem magnetischen Laufschaufelbereich 17 zu kombinieren oder aber einen magnetischen Leitschaufelbereich 15 mit einem konventionellen Laufrad oder Laufschaufelreihe 47. In diesem Sinne sind demnach auch "Mischstufen" mit MHD-und konventioneller Beschaufelung in einer Strömungsmaschine 1oder in einer Prozessanlage mit einer Strömungsmaschine 1 realisierbar. Dabei ist es zweckmäßig für den Betrieb der Strömungsmaschine 1 die Ionisierungseinrichtung 23 dem MHD-Prozess vorzuschalten, damit bereits beim Eintritt in den Strömungskanal 7 der Strömungsmaschine 1 eine hinreichend große Dichte an Ionen 27 im Aktionsfluid gewährleistet ist. Eine Nachionisation kann im Verlauf der Prozesses, d.h. während des Durchströmens des Strömungskanals 7 mit dem ionenhaltigen Aktionsfluid A, kontinuierlich oder wiederholt mittels geeigneter Ionisierungseinrichtungen 23 vorgenommen werden. Eine Rekombinationseinrichtung 31 kann nach Durchströmen der MHD-Beschaufelung oder fallweise auch in deren Verlauf - insbesondere bei schutzbedürftigen Einrichtungen oder Bauteilen im Strömungskanal 7 - zur Reinigung vorgesehen sein. Es empfiehlt sich im letzteren Fall die erneute Ionisation von Aktionsfluid A im Strömungskanal 7 vor Einströmen des Aktionsfluids A in den nächsten magnetischen Leitschaufelbereich 15 oder Laufschaufelbereich 17.

## Patentansprüche

1. Strömungsmaschine (1) mit einem Rotor (3) und einem Stator (5), wobei ein Strömungskanal (7) für ein Aktionsfluid (A) gebildet ist, durch welches der Rotor (3) antreibbar ist, **gekennzeichnet durch** einen Magneten (9) zum Erzeugen eines vorgebbaren Magnetfelds (B) im Strömungskanal (7).

2. Strömungsmaschine (1) nach Anspruch 1,
**dadurch gekennzeichnet, dass** der Stator (5) den Magneten (9) aufweist.

3. Strömungsmaschine (1) nach Anspruch 1 oder 2,
**dadurch gekennzeichnet, dass** das Magnetfeld (B) radial gerichtet ist.

4. Strömungsmaschine (1) nach Anspruch 3,
**dadurch gekennzeichnet, dass** das Magnetfeld (B) entlang der Rotationsachse (11) des Rotors (3) bezogen auf die radiale Richtung mindestens einen Vorzeichenwechsel aufweist.

5. Strömungsmaschine (1) nach Anspruch 1, 2, 3 oder 4,
**dadurch gekennzeichnet, dass** ein sich axial erstreckender magnetischer Leitschaufelbereich (15) mit konstantem Vorzeichen des Magnetfeldes und ein sich axial erstreckender magnetischer Laufschaufelbereich (17) mit gegenüber dem Leitschaufelbereich (15) umgekehrten Vorzeichen des Magnetfelds (B) vorgesehen ist

6. Strömungsmaschine (1) nach Anspruch 5,
**dadurch gekennzeichnet, dass** der magnetische Laufschaufelbereich (17) dem magnetischen Leitschaufelbereich (15) in Strömungsrichtung des Aktionsfluids (A) axial nachgeordnet ist.

7. Strömungsmaschine (1) nach Anspruch 5 oder 6,
**dadurch gekennzeichnet, dass** eine Anzahl von magnetischen Leitschaufelbereichen (15) und Laufschaufelbereichen (17) abwechselnd entlang der Rotationsachse (11) angeordnet ist.

8. Strömungsmaschine (1) nach Anspruch 5, 6 oder 7,
**dadurch gekennzeichnet, dass** zur räumlichen Begrenzung des Magnetfelds (B) im magnetischen Leitschaufelbereich (15) der Stator (5) einen sich radial einwärts erstreckenden Umfangsring (29A) aufweist.

9. Strömungsmaschine (1) nach Anspruch 5, 6, 7 oder 8,
**dadurch gekennzeichnet, dass** zur Begrenzung des Magnetfelds (B) im magnetischen Leitschaufelbereich (15) der magnetische Leitschaufelbereich (15) einen sich radial einwärts erstreckenden Vorsprung (19) des Stators (5) umfasst.

10. Strömungsmaschine (1) nach Anspruch 9,
**dadurch gekennzeichnet, dass** mehrere sich radial einwärts erstreckende Vorsprünge (19) über den vollen Umfang des Stators (5) angeordnet sind.

11. Strömungsmaschine (1) nach einem der Ansprüche 5 bis 10, **dadurch gekennzeichnet, dass** zur räumlichen Begrenzung des Magnetfelds (B) im magnetischen Laufschaufelbereich (17) der Rotor (3) einen sich radial auswärts erstreckenden Umfangsring (29B) aufweist.

12. Strömungsmaschine (1) nach einem der Ansprüche 5 bis 11, **dadurch gekennzeichnet, dass** zur Begrenzung des Magnetfelds (B) im magnetischen Laufschaufelbereich (17)der magnetische Laufschaufelbereich (17) einen sich radial auswärts erstreckenden Vorsprung (21) des Rotors (3) umfasst.

13. Strömungsmaschine (1) nach Anspruch 12,
**dadurch gekennzeichnet, dass** mehrere sich radial auswärts erstreckende Vorsprünge (21) über den vollen Umfang des Rotors (3) angeordnet sind.

14. Strömungsmaschine (1) nach einem der vorhergehenden Ansprüche,
**dadurch gekennzeichnet,** eine Ionisierungseinrichtung (23) zur Erzeugung von geladenen Teilchen (25) im Aktionsfluid (A).

15. Strömungsmaschine (1) nach einem der vorhergehenden Ansprüche,
**gekennzeichnet durch** eine Rekombinationseinrichtung (31) zur Rekombination von geladenen Teilchen (25) im Aktionsfluid (A).

16. Verfahren zum Betrieb einer Strömungsmaschine (1) mit einem Rotor (3) und einem Stator (5) und einem Strömungskanal (7), bei dem der Strömungskanal (7) von einem ionenhaltigen Aktionsfluid (A) durchströmt und im Strömungskanal (7) ein definiertes Magnetfeld (B) erzeugt wird, wobei Ionen (27) in dem Magnetfeld (B) abgelenkt werden.

17. Verfahren nach Anspruch 16,
**dadurch gekennzeichnet, dass** der Rotor (3) infolge der Ablenkung von Ionen (27) aufgrund der Wechselwirkung mit dem Magnetfeld (B) in Rotation versetzt wird.

18. Verfahren nach Anspruch 16 oder 17,
**dadurch gekennzeichnet, dass** im Strömungskanal ein auf die Ionen (27) einwirkendes radiales Magnetfeld (B) derart erzeugt wird, daß beim Durchströmen des Strömungskanals (7) die tangentiale Geschwindigkeitskomponente (v) des ionenhaltigen Aktionsfluid (A) gezielt beeinflusst wird.

19. Verfahren nach Anspruch 16, 17 oder 18,
**dadurch gekennzeichnet, dass** im Strömungskanal (7) ein radiales Magnetfeld (B), welches entlang der Strömungsrichtung des ionenhaltigen Aktionsfluids (A) alterniert, erzeugt wird.

20. Verfahren nach einem der Ansprüche 16 bis 19,
**dadurch gekennzeichnet, dass** das Magnetfeld (B) zeitlich und/oder räumlich geregelt wird.

21. Verfahren nach einem der Ansprüche 16 bis 20,
**dadurch gekennzeichnet, dass** das ionenhaltige Aktionsfluid (A) durch Ionisation von Teilchen im Aktionsfluid (A) vor Durchströmen des Strömungskanals (7) gebildet wird.

22. Verfahren nach einem der Ansprüche 16 bis 21,
**dadurch gekennzeichnet, dass** Ionen (27) durch Ionisation von Teilchen im Aktionsfluid (A) während dem Durchströmen des Strömungskanals (7) gebildet werden.

23. Verfahren nach einem der Ansprüche 16 bis 22,
**dadurch gekennzeichnet, dass** Ionen (27) durch Stoßionisation gebildet werden

24. Verfahren nach einem der Ansprüche 16 bis 23,
**dadurch gekennzeichnet, dass** Ionen (27) durch Strahlungsionisation gebildet werden.

25. Verfahren nach einem der Ansprüche 14 bis 24,
**dadurch gekennzeichnet, dass** in einem Rekombinationsprozeß und/ oder einem katalytischen Prozess das Aktionsfluid (A) von schädigenden Substanzen gereinigt wird.

26. Verfahren nach Anspruch 25,
**dadurch gekennzeichnet, dass** die Reinigung während und/oder nach Durchströmen des Strömungskanals (7) durchgeführt wird.
